# EUROPEAN PATENT APPLICATION

(11) **EP 3 792 188 A1**
(43) Date of publication of application: **17.03.2021**
(21) Application number: 20193691.1
(22) Date of filing: 31.08.2020
(51) Int. Cl.: B64G 1/22, G10K 11/172, B64G 1/00

(54) **MODULAR ACOUSTIC PROTECTION ARRANGEMENT AND METHOD FOR MANUFACTURING SUCH AN ACOUSTIC PROTECTION ARRANGEMENT**

(30) Priority: 10.09.2019 CH 11392019
(71) Applicant: RUAG Schweiz AG, 8052 Zürich (CH)
(72) Inventor: FREIBURGHAUS, Silvio, 8152 Opfikon (CH)
(74) Representative: Troesch Scheidegger Werner AG

(57) **Abstract**

The present invention relates to an acoustic protection arrangement (1) especially intended to be employed in a launch vehicle structure. The acoustic protection arrangement (1) comprises a plurality of acoustic protection modules (2, 2', ...), in particular acoustic absorber modules, wherein at least one of the acoustic protection modules (2, 2', ...) is tuned to a different frequency, in particular has a different peak absorption frequency (fₚ, f_{p'}, ...) or acoustic frequency response, than at least another one of the acoustic protection modules (2, 2', ...). Furthermore, a kit of parts for assembling such an acoustic protection arrangement (1) is provided, and a method for manufacturing such an acoustic protection arrangement (1) is proposed. According to the present invention the acoustic protection arrangement (1) can be implemented based on the kit of parts by selecting appropriate acoustic protection modules (2, 2', ...) and combining them to form an acoustic protection arrangement (1) that fulfils the specific acoustic and geometric requirements for a certain application, such as a certain launch vehicle type and/or launch mission. The acoustic protection arrangement (1) can thus be adapted to a customer's needs, in particular by tuning the proposed acoustic protection arrangement (1) to achieve a desired overall level of acoustic attenuation.

## Description

### TECHNICAL FIELD

The present invention relates to an acoustic protection arrangement especially intended to be employed in a launch vehicle structure, as well as a kit of parts for assembling such an acoustic protection arrangement and a method for manufacturing such an acoustic protection arrangement. Such an acoustic protection arrangement could for instance be installed in a payload fairing, an inter-stage adapter, a multi-launch canister, a heat shield or a payload attachment fitting of a launch vehicle, such as a carrier rocket, used to carry a payload from the Earth's surface to space.

### BACKGROUND OF THE INVENTION

In order to transport payloads such as satellites from the Earth's surface to space launch vehicle such as a carrier rocket require very powerful propulsion systems. These generate high sound pressure levels (e.g. > 140 dB) during lift-off and flight. This acoustic energy is so high that it can damage the payload or components contained therein. Therefore, acoustic induced damage must be considered during the design of the payload and can result in a large increase in cost in order to make the payload robust enough to withstand the harsh launch conditions. The move towards lighter composite materials for building launch vehicles and especially payload fairings exacerbates the problem of acoustic transmission. In a competitive market, ensuring that the payload always remains safe in such a hostile acoustic environment has become an important performance criterion for providers of launch vehicle structures. Consequently, measures must be taken to protect a payload from excessive acoustic energy. This is for instance achieved by employing an acoustic protection system, which attenuates the sound pressure to which the payload is exposed to a desired level. A payload fairing with improved acoustic suppression are for instance disclosed in US 5,670,758 and EP 1 014 335. A problem with the presently known means for acoustic protection of payloads is that they cannot be easily adapted to different payloads or to different launch vehicles or launch vehicle structures. Each new application therefore necessitates a time-consuming and costly new design and implementation from scratch. Hence, there is a need for acoustic protection means which can be easily and quickly adapted to the specific need of a customer, and best possibly meeting the special requirements of a certain application, thus reducing the cost whilst providing optimal acoustic protection for a payload.

### SUMMARY OF THE INVENTION

It is an object of the present invention to provide an acoustic protection arrangement that can be easily and quickly customised to the specific requirements of a certain application and provide effective acoustic protection. This object is reached by the acoustic protection arrangement according to claim 1.

Moreover, it is a further goal of the present invention to provide means for assembling a customised acoustic protection arrangement based on a limited set of standard parts, e.g. in the sense of a "construction kit". This aim is achieved by the kit of parts specified in claim 9.

In addition, it is also an object of the present invention to provide an efficient method for manufacturing an acoustic protection arrangement. This object is fulfilled by the method according to claim 10.

Specific embodiments of the methods and apparatus according to the present invention are given in the dependent claims.

The present invention provides an acoustic protection arrangement comprising a plurality of acoustic protection modules, in particular acoustic absorber modules, wherein at least one of the acoustic protection modules is tuned to a different frequency, in particular has a different peak absorption frequency or acoustic frequency response, than at least another one of the acoustic protection modules.

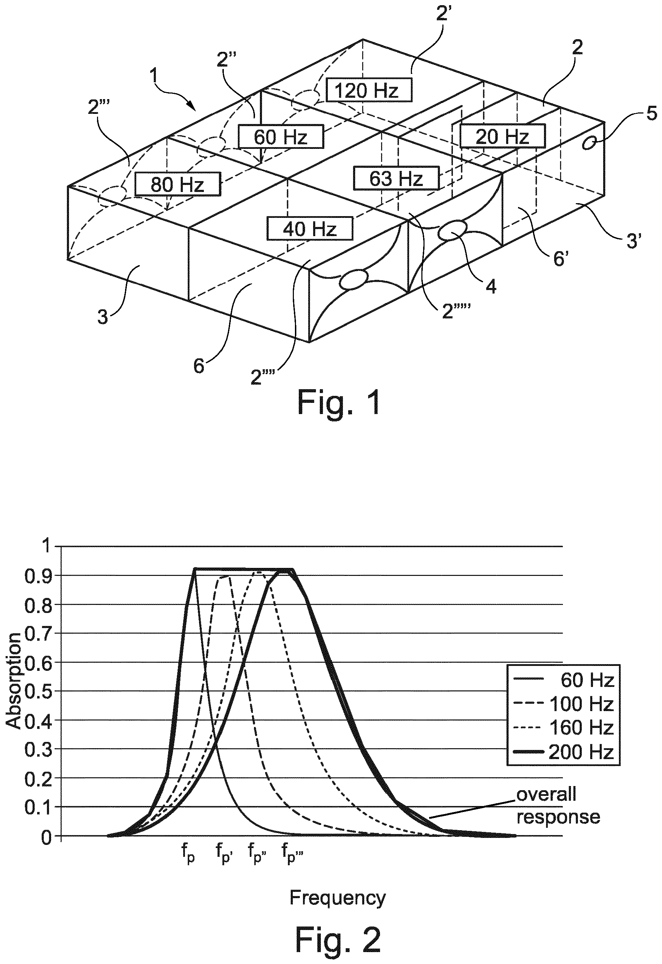

This allows the overall (vibro-)acoustic response to be adapted to a customer's needs for a specific application and provide optimal acoustic protection. This is achieved by tuning the acoustic frequency response, in particular the peak absorption frequency, of individual acoustic absorbers such that together they provide the desired acoustic protection over an entire frequency range (cf. Figs. 1 & 2).

In an embodiment of the acoustic protection arrangement the plurality of acoustic protection modules comprises at least a first set of one or more acoustic protection modules with a first structure and a second set of one or more acoustic protection modules with a second structure, the first and second structures being different from one another, in particular wherein the first structure constitutes a first type of Helmholtz resonator and the second structure constitutes a second type of Helmholtz resonator, for instance wherein the first type of Helmholtz resonator comprises an enclosure with a horn- or funnel-shaped inlet extending into the enclosure (with an opening at its inner/proximal end) and the second type of Helmholtz resonator comprises an enclosure with an opening and a plurality of partitions formed by interior walls displaced relative to one another providing a meander-like pathway within the enclosure.

The first set of acoustic protection modules is for instance intended to absorb acoustic energy in a frequency range between 100 and 200 Hz, whereas the second set of acoustic protection modules is for instance intended to absorb acoustic energy in at frequencies below 100 Hz.

By employing at least two different acoustic absorber structures the frequency range of the acoustic protection can be extended, in particular to lower frequencies.

In a further embodiment of the acoustic protection arrangement at least one of the following applies (to the acoustic protection modules):
- the acoustic protection modules all have the same shape, and in particular all have the same size (i.e. the same outer dimensions);
- the acoustic protection modules belonging to the first set all have the same shape, and in particular all have the same size (i.e. the same outer dimensions);
- the acoustic protection modules belonging to the second set all have the same shape, and in particular all have the same size (i.e. the same outer dimensions), more particularly are all larger or smaller than the acoustic protection modules belonging to the first set;
- the (individual) peak absorption frequency of (all) the acoustic protection modules belonging to the second set is lower or higher than the (individual) peak absorption frequency of (all) the acoustic protection modules belonging to the first set.

In a further embodiment of the acoustic protection arrangement the acoustic protection modules, in particular the enclosures, are box-, cylinder- or cone-shaped or are at least partly box-, cylinder- or cone-shaped, for instance are a combination of cylinder- and cone-shaped, or have a doubly curved surface.

In a further embodiment of the acoustic protection arrangement a wall (including a ceiling or lid) of at least one of the acoustic protection modules or an interior wall within at least one of the acoustic protection modules, in particular one of the enclosures, is moveable within the acoustic protection module or enclosure, in particular removable from the acoustic protection module or enclosure, more particularly replaceable by another wall having a different stiffness, more particularly with a different thickness and/or made of a different material.

This allows to (fine-)tune the acoustic frequency response and in particular the peak absorption frequency.

In a further embodiment of the acoustic protection arrangement the wall features a hole (or a slit), in particular forming an inlet or an opening to an exterior of the acoustic protection module or enclosure, in particular wherein the wall is replaceable by another wall having a different inlet or opening, in particular wherein the inlet or opening has a different shape and/or size.

This also allows to (fine-)tune the acoustic frequency response and in particular the peak absorption frequency.

In a further embodiment of the acoustic protection arrangement a wall of at least one of the acoustic protection modules or an interior wall within at least one of the acoustic protection modules, in particular within the enclosure, features a hole, in particular forming an opening to an exterior of the acoustic protection module or enclosure, wherein a size of the hole is adjustable, for instance by means of a moveable shutter.

This also allows to (fine-)tune the acoustic frequency response and in particular the peak absorption frequency.

In a further embodiment of the acoustic protection arrangement two or more acoustic protection modules are arranged on a base plate, in particular fixedly or removably attached to the base plate, and in particular wherein the base plate is shaped to be mounted on an inside segment of a cylindrical, conical or doubly curved surface, in particular in a form-fitting manner.

In a further embodiment of the acoustic protection arrangement the acoustic protection modules are joined together (on a (virtual) two-dimensional grid), either fixedly or releasably, to form a panel, in particular wherein the acoustic protection modules form compartments of the panel, and in particular wherein the panel is shaped to be mounted on an inside portion of a cylindrical, conical or doubly curved surface, in particular in a form-fitting manner. The acoustic protection modules may for instance be glued together, held together by magnets, plugged/"click-connected" together, etc.

In a further embodiment of the acoustic protection arrangement at least two adjacent modules are acoustically coupled with each other, for instance by means of an aperture/hole in a common side or rear wall or in contacting sides or rear walls of the two adjacent modules.

In a further embodiment of the acoustic protection arrangement at least a part of the plurality of acoustic protection modules is jointly covered by a microperforated sheath, in particular wherein the sheath has a thickness of less than 10 mm, more particularly less than 5 mm, even more particularly less than 1 mm, and in particular wherein the sheath features perforations having a diameter (e.g. of a hole) or an extent (e.g. of a slit) of less than 2 mm, more particularly of less than 1 mm, even more particularly of less than 0.5 mm, and in particular wherein the perforations are spaced apart by less than 50 mm, more particularly by less than 10 mm, even more particularly by less than 5 mm, in particular wherein the sheath is made of a polyester, in particular biaxially-oriented polyethylene terephthalate (boPET), such as Mylar®.

Such a microperforated sheath is especially intended to absorb acoustic energy at frequencies above 200 Hz.

In a further embodiment of the acoustic protection arrangement the acoustic protection modules, in particular the enclosures, are at least partly filled with a filler material or structure, in particular a porous or gaseous material, such as a(n open-cell) foam, in particular a polystyrene foam, expanded polystyrene or one or more gas/air filled plastic sheaths or sheeting (like bubble wrap with encapsulated gas/air, e.g. in a multitude of individual chambers) or a honeycomb structure, in particular wherein the acoustic protection modules, in particular the modules or enclosures comprise means adapted to regulate a gas/air pressure of the filler material.

It is specifically pointed out that combinations of the embodiments described above can result in even further, more specific embodiments.

Furthermore, the present invention is directed to a launch vehicle structure with an acoustic protection arrangement according to any one of the above-mentioned embodiments disposed on an inside wall of the structure, in particular on a cylindrical, conical or doubly curved portion of the inside wall, the structure in particular being at least one of the following:
- a payload fairing,
- an inter-stage adapter,
- a multi-launch canister,
- a heat shield,
- a payload attachment fitting.

Furthermore, the present invention is directed to a kit of parts for assembling an acoustic protection arrangement according to any one of the above-mentioned embodiments, comprising the following parts:
- at least a first set of acoustic protection modules with a first structure, wherein the first set of acoustic protection modules comprise acoustic protection modules having different acoustic properties, in particular having different peak absorption frequencies or acoustic frequency responses;
and further optionally comprising one or more of the following parts:
- a second set acoustic protection modules with a second structure which is different than the first structure (of the first set), in particular wherein the first and second sets of acoustic protection modules comprise acoustic protection modules having different acoustic properties, in particular having different peak absorption frequencies or acoustic frequency responses, e.g. where the peak absorption frequencies of the first set are all higher than the peak absorption frequencies of the second set;

- a set of different wall or interior wall elements adapted to be comprised in the acoustic protection modules, in particular having different stiffnesses, more particularly with different thicknesses and/or made of different materials, and in particular featuring a hole of different shapes and sizes;
- a set of different base plates, in particular having different shapes and sizes, and in particular having different stiffnesses, more particularly with different thicknesses and/or made of different materials;
- a set of different microperforated sheaths, in particular with different thicknesses, and in particular featuring perforations of different diameters/extents (for different sheaths), and in particular wherein the perforations are spaced apart at different distances (for different sheaths).

This allows the acoustic protection arrangement to be built of pre-designed, pre-tested/certified and potentially even prefabricated parts quickly and easily and thus very cost-effectively, and to achieve a reliable solution. Furthermore, the present invention is directed to a method for manufacturing an acoustic protection arrangement according to any one of the above-mentioned embodiments, comprising the steps of:
- providing acoustic and geometric requirements of a desired acoustic protection arrangement;
- based on the acoustic and geometric requirements selecting parts from a kit of parts specified above and arranging the selected parts to form a design of the acoustic protection arrangement;
- generating a three-dimensional geometrical model of the design of the acoustic protection arrangement;
- determining acoustic properties of the design of the acoustic protection arrangement based on the three-dimensional geometrical model, in particular by means of computer simulation;
- comparing the determined acoustic properties with the acoustic requirements;
- modifying the design of the acoustic protection arrangement in case the acoustic properties do not meet the acoustic requirements (within a predefined tolerance), in particular by one or more of:
   ∘ replacing/exchanging a part,
   ∘ adding/removing a part,
   ∘ modifying a part by moving a part within the part, and
   ∘ modifying a part by redesigning the part, and in particular adding the redesigned part to the kit of parts;
- repeating the steps of generating a three-dimensional geometrical model, determining acoustic properties, comparing the determined acoustic properties and modifying the design until the acoustic properties of the design of the acoustic protection arrangement meet the acoustic requirements of the desired acoustic protection arrangement;
- manufacturing the parts, in particular by means of computer-controlled additive manufacturing, in particular 3D-printing, moulding, in particular vacuum moulding, and deep-drawing; and
- assembling the parts to form a manufactured acoustic protection arrangement.

This allows the acoustic protection arrangement to be designed quickly and easily to a customer's/ application's specific requirements based on a library of "standard" parts and to ensure that the desired acoustic performance is achieved by the resulting solution.

In an embodiment the method for manufacturing further comprises the steps of:
- measuring acoustic properties of the manufactured acoustic protection arrangement;
- modifying the manufactured acoustic protection arrangement in case the measured acoustic properties do not meet the acoustic requirements, in particular by one or more of:
   ∘ replacing/exchanging a part,
   ∘ adding/removing a part,
   ∘ modifying a part by moving a part within the part, and
   ∘ modifying a part by redesigning the part, and in particular adding the redesigned part to the kit of parts;
- repeating the steps of measuring acoustic properties, comparing the measured acoustic properties and modifying the manufactured acoustic protection arrangement until the measured acoustic properties meet the acoustic requirements of the desired acoustic protection arrangement.

### BRIEF DESCRIPTION OF THE DRAWINGS

The present invention is further explained below by means of non-limiting specific embodiments and with reference to the accompanying drawings, which show the following:
- Fig. 1: an exemplary embodiment of an acoustic protection arrangement according to the present invention comprising a plurality of acoustic protection/ absorber modules tuned to different peak absorption frequencies;
- Fig. 2: an exemplary graph of an overall acoustic absorption response of an acoustic protection arrangement according to the present invention also showing the contributions of the individual absorber modules;
- Fig. 3: a further exemplary embodiment of an acoustic protection arrangement according to the present invention comprising two differently structured acoustic absorber module types A & B;
- Fig. 4: yet another exemplary embodiment of an acoustic protection arrangement according to the present invention comprising moveable/replaceable walls for instance including an opening with different shapes and sizes; and
- Fig. 5: yet a further exemplary embodiment of an acoustic protection arrangement according to the present invention comprising a microperforated sheath covering the plurality of acoustic protection modules.

In the figures same reference symbols refer to same or corresponding elements.

### DETAILED DESCRIPTION OF THE INVENTION

Fig. 1 depicts an exemplary embodiment of an acoustic protection arrangement 1 according to the present invention comprising six acoustic protection/absorber modules 2, 2', ... tuned to different peak absorption frequencies, namely at 20 Hz, 40 Hz, 60 Hz, 63 Hz, 80 Hz & 120 Hz. With such an acoustic protection arrangement 1 an overall absorption frequency response as shown in the graph of Fig. 2 can be achieved having a broader frequency band (from 60 to 200 Hz) in which acoustic energy is absorbed than the narrow frequency response of each individual acoustic absorber module 2, 2', ... whose peak absorption frequencies are tuned to 60 Hz, 100 Hz, 160 Hz & 200 Hz.

The individual acoustic absorber modules 2, 2', ... are chosen from a set of pre-designed, -tested and perhaps even prefabricated modules having different frequency responses such that the resulting acoustic protection arrangement 1 fulfils the specific requirements of a customer for his dedicated application, taking into account a certain launch vehicle, mission type and payload.

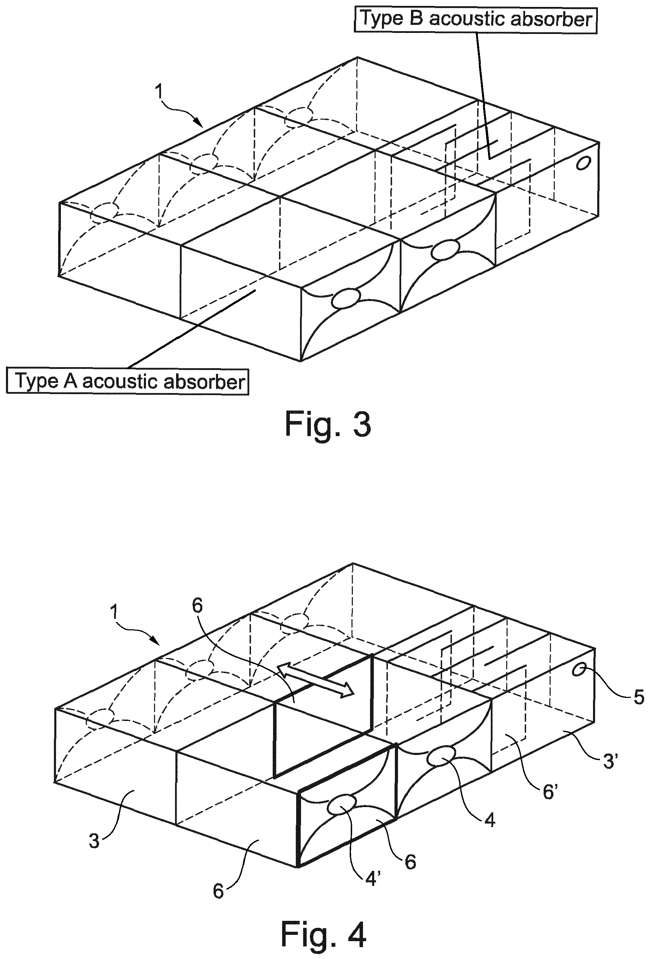

As illustrated in Fig. 3 the employed plurality of acoustic protection modules 2, 2', ... may belong to (e.g. at least) two different sets A & B of acoustic protection modules 2, 2', ..., where the first set A has a first structure and the second set B has a second, different structure. For instance, the first structure may constitute a first type of Helmholtz resonator and the second structure may constitute a second type of Helmholtz resonator. For example the first type of Helmholtz resonator may comprise an enclosure 3 with a horn- or funnel-shaped inlet 4 extending into the enclosure 3 and the second type of Helmholtz resonator may comprise an enclosure 3' with an opening 5 and a plurality of partitions formed by interior walls 6' displaced relative to one another providing a meander-like pathway within the enclosure. The two sets A & B of acoustic protection modules 2, 2', ... may for instance have different acoustic frequency responses, e.g. the acoustic protection modules 2, 2', ... belonging to the first set A may all have their peak absorption frequency fₚ, f_{p'}, ... at higher frequencies than those of the second set B. By concurrently employing acoustic protection modules 2, 2', ... from both sets A & B the overall acoustic absorption frequency range can be made broader then when only using modules from one of the two sets. On the other hand the size and shape of the modules belonging to the first set may be different than of those belonging to the second set, so that the geometric constraints imposed by a certain application can be accommodated by the designed acoustic protection arrangement 1 whilst the application's specific acoustic performance requirements are also met.

As depicted in Fig. 4 a (top, bottom or side) wall 6 of (at least one of) the acoustic protection modules 2, 2', ... or an interior wall 6' within (at least one of) the acoustic protection modules 2, 2', ... or enclosures 3 is moveable within the acoustic protection module 2, 2', ... or enclosure 3. The wall may in particular be removable from the acoustic protection module 2, 2', ... or enclosure 3, 3' and be replaceable by another wall 6, 6' for instance having a different stiffness, e.g. with a different thickness and/or made of a different material. By doing so the acoustic frequency response (e.g. the peak absorption frequency fₚ) may be fine-tuned to a desired value, in particular after fabricating and testing the entire acoustic protection arrangement 1, with little effort and cost (compared to a complete redesign and fabrication of a new module).

The wall 6 may feature a hole forming an inlet 4 or an opening 5 to an exterior of the acoustic protection module 2, 2', ... or enclosure 3, 3' which influences the acoustic properties of the module 2, 2', .... The wall 6 can therefore for instance be replaceable by another wall 6 having a different inlet 4' or opening 5, e.g. having a different shape and/or size in order to alter the acoustic properties and fine-tune the acoustic characteristics to the specific needs of the customer. Instead of replacing the wall 6 with another wall 6 having a different inlet 4' or opening 5, alternatively the size of the inlet 4 or opening 5 can be made adjustable for instance by means of a moveable shutter or an iris mechanism (such as known from optical lenses), which can be opened and closed to adjust the size of the aperture. Such a mechanism could be either manually adjusted during (pre-launch) assembly of the acoustic protection arrangement 1 or even be automatically controllable in use (in-flight) in order to optimise the acoustic performance in real-time.

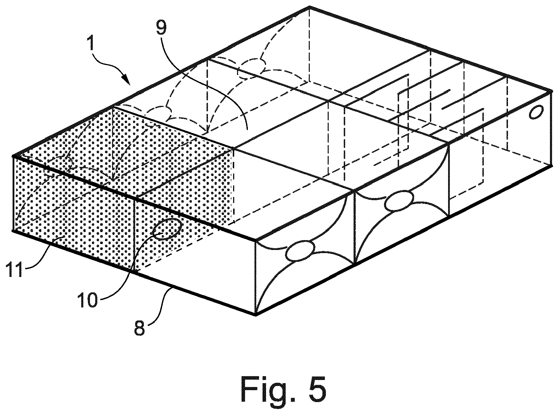

As indicated in Fig. 5, the individual acoustic protection modules 2, 2', ... may be arranged on a base plate 8 to which they are either fixedly or removably attached. The base plate 8 may in particular be shaped to be mounted, for instance in a form-fitting manner, on the inside surface of a launch vehicle structure, such as a payload fairing, an inter-stage adapter, a multi-launch canister, a heat shield or a payload attachment fitting. This allows pre-assembly of the entire acoustic protection arrangement 1 or sections thereof and sequent quick and easy mounting of the acoustic protection arrangement 1 in the launch vehicle.

Alternatively, the individual acoustic protection modules 2, 2', ... may be joined together (either fixedly or releasably) to form a panel, e.g. whereby the acoustic protection modules 2, 2', ... form compartments of the panel. The panel is shaped to be mounted, for instance in a form-fitting manner, on the inside surface of a launch vehicle structure.

The acoustic characteristics of the acoustic protection arrangement 1 may be adjusted by acoustically coupling multiple adjacent modules with each other, for instance by means of an aperture 10 in a common side or rear wall or in contacting sides or rear walls of two adjacent modules 2, 2', ....

Furthermore, as illustrated in Fig. 5 (at least a part of) the plurality of acoustic protection modules 2, 2', ... of the acoustic protection arrangement 1 may be jointly covered by a microperforated sheath 9. The sheath 9 may have a thickness of for instance less than 10 mm (or less than 5 mm or even less than 1 mm). The sheath 9 for example features perforations having a diameter (or an extent) of for instance less than 2 mm (or of less than 1 mm or even of less than 0.5 mm), whereby the perforations may for instance be spaced apart by less than 50 mm (or by less than 10 mm or even by less than 5 mm). The sheath 9 may for example be made of a polyester, in particular biaxially-oriented polyethylene terephthalate (boPET) such as Mylar®. With such a microperforated sheath 9 the acoustic energy at frequencies above 200 Hz can be effectively absorbed thus resulting in an improved acoustic protection at higher frequencies.

The acoustic characteristics of the acoustic protection arrangement 1 can be further adjusted by (at least partially) filling the acoustic protection modules 2, 2', ... (or selected ones thereof) with a filler material 11 or structure. The filler material 11 may be one or a combination of a porous or gaseous material, such as a(n open-cell) foam, for instance a polystyrene foam, expanded polystyrene or one or more gas, e.g. air, filled plastic sheaths or sheeting or a honeycomb structure. The acoustic protection modules 2, 2', ... may additionally comprise means adapted to regulate a gas pressure of the filler material 11 such that the acoustic properties may for instance be adjusted in real-time during use of the acoustic protection arrangement 1 (in-flight).

With all these embodiments of the proposed acoustic protection arrangement 1 it is possible to come up with a design that exactly meets the acoustic and geometric requirements of a customer and thus provide optimal acoustic protection of a specific payload in a certain launch vehicle and mission type.

To achieve this the proposed method of (designing and) manufacturing an acoustic protection arrangement using computer-aided design, simulation and manufacturing techniques and computer system is proposed as follows. In a first step the acoustic and geometric requirements of the desired acoustic protection arrangement 1 are entered into the computer system. Based on these requirements appropriate parts are (semi-)automatically selected by the computer system (with the aid of a human operator) from the proposed kit of ("standard") pre-characterised, pre-tested/certified and potentially even prefabricated parts and (semi-)automatically arranged by the computer system (with the aid of a human operator) to form a design of the acoustic protection arrangement 1 fulfilling the geometric requirements. With this a three-dimensional geometrical model of the design of the acoustic protection arrangement 1 is automatically generated by the computer system. Based on this three-dimensional geometrical model acoustic properties of the design of the acoustic protection arrangement 1 are determining by means of computer simulation. Then the determined acoustic properties are compared with the acoustic requirements. In case the acoustic properties do not meet the acoustic requirements the design of the acoustic protection arrangement is modified, for instance by performing one or more of:
∘ replacing/exchanging a part,
∘ adding/removing a part,
∘ modifying a part by moving a part within the part, and
∘ modifying a part by redesigning the part, and in particular adding the redesigned part to the kit of parts.

The steps of generating a three-dimensional geometrical model, determining acoustic properties, comparing the determined acoustic properties and modifying the design are (or may be) repeated until the acoustic properties of the design of the acoustic protection arrangement 1 meet the acoustic requirements of the desired acoustic protection arrangement 1. Subsequently, the parts are manufactured, for instance by means of computer-controlled additive manufacturing, such as 3D-printing, (vacuum) moulding and deep-drawing, and assembled to form a manufactured acoustic protection arrangement.

Additionally, the actual acoustic properties of the manufactured acoustic protection arrangement 1 are measured. In case the measured acoustic properties do not meet the acoustic requirements the manufactured acoustic protection arrangement 1 is modified, for instance by performing one or more of:
∘ replacing/exchanging a part,
∘ adding/removing a part,
∘ modifying a part by moving a part within the part, and
∘ modifying a part by redesigning the part, and in particular adding the redesigned part to the kit of parts.

The steps of measuring acoustic properties, comparing the measured acoustic properties and modifying the manufactured acoustic protection arrangement 1 are (or may be) repeated until the measured acoustic properties meet the acoustic requirements of the desired acoustic protection arrangement 1.

Finally, the manufactured acoustic protection arrangement 1 or sections thereof are mounted on an inside wall of a launch vehicle structure.

In this way it is ensured that the manufactured acoustic protection arrangement 1 meets the expectations of the customer and provides the desired acoustic protection to the payload in an effective manner. This is achieved quickly and efficiently based on the proposed kit of (pre-certified and thus reliable) parts taken a "standard" library of pre-designed, pre-characterised and potentially even prefabricated parts using the method of designing and manufacturing described above in a cost-effective manner. The (re-)use of pre-certified parts is especially preferable in space applications where a high degree of reliability is required and the certification processes and thus very time-consuming and costly. The acoustic protection arrangement 1 and method of manufacturing such an acoustic protection arrangement 1 are therefore superior compared with known solutions and techniques.

### LIST OF REFERENCE SYMBOLS

- 1: acoustic protection arrangement
- 2, 2', ...: acoustic protection module
- 3, 3': enclosure
- 4, 4': inlet
- 5: opening
- 6, 6': (interior) wall
- 7: partition
- 8: base plate
- 9: microperforated sheath
- 10: (internal) aperture
- 11: filler material or structure
- A: first set of acoustic protection/absorber modules
- B: second set of acoustic protection/absorber modules
- fₚ, f_{p'},: ... peak absorption frequency

## Claims

1. An acoustic protection arrangement (1) comprising a plurality of acoustic protection modules (2, 2', ...), in particular acoustic absorber modules, wherein at least one of the acoustic protection modules (2) is tuned to a different frequency, in particular has a different peak absorption frequency (fₚ) or acoustic frequency response, than at least another one of the acoustic protection modules (2).

2. The acoustic protection arrangement (1) of claim 1, wherein the plurality of acoustic protection modules (2, 2', ...) comprises at least a first set (A) of one or more acoustic protection modules (2, 2', ...) with a first structure and a second set (B) of one or more acoustic protection modules (2, 2', ...) with a second structure, the first and second structures being different from one another, in particular wherein the first structure constitutes a first type of Helmholtz resonator and the second structure constitutes a second type of Helmholtz resonator, for instance wherein the first type of Helmholtz resonator comprises an enclosure (3) with a horn- or funnel-shaped inlet (4, 4') extending into the enclosure (3) and the second type of Helmholtz resonator comprises an enclosure (3') with an opening (5) and a plurality of partitions formed by interior walls (6') displaced relative to one another providing a meander-like pathway within the enclosure (3').

3. The acoustic protection arrangement (1) of claim 1 or 2, wherein at least one of the following applies:
- the acoustic protection modules (2, 2', ...) all have the same shape, and in particular all have the same size;
- the acoustic protection modules (2, 2', ...) belonging to the first set (A) all have the same shape, and in particular all have the same size;
- the acoustic protection modules (2, 2', ...) belonging to the second set (B) all have the same shape, and in particular all have the same size, more particularly are all larger or smaller than the acoustic protection modules (2, 2', ...) belonging to the first set (A);
- the peak absorption frequency (fₚ) of the acoustic protection modules (2, 2', ...) belonging to the second set (B) is lower or higher than the peak absorption frequency (f_{p'}) of the acoustic protection modules (2, 2', ...) belonging to the first set (A).

4. The acoustic protection arrangement (1) of any one of claims 1 to 3, wherein the acoustic protection modules (2, 2', ...), in particular the enclosures (3), are box-, cylinder- or cone-shaped or are at least partly box-, cylinder- or cone-shaped, for instance are a combination of cylinder- and cone-shaped, or have a doubly curved surface.

5. The acoustic protection arrangement (1) of any one of claims 1 to 4, wherein a wall (6) of at least one of the acoustic protection modules (2, 2', ...) or an interior wall (6') within at least one of the acoustic protection modules (2, 2', ...), in particular one of the enclosures (3, 3'), is moveable within the acoustic protection module (2, 2', ...) or enclosure (3, 3'), in particular removable from the acoustic protection module (2, 2', ...) or enclosure (3, 3'), more particularly replaceable by another wall (6) having a different stiffness, more particularly with a different thickness and/or made of a different material.

6. The acoustic protection arrangement (1) of claim 5, wherein the wall (6) features a hole, in particular forming an inlet (4) or an opening (5) to an exterior of the acoustic protection module (2, 2', ...) or enclosure (3), in particular wherein the wall (6) is replaceable by another wall (6) having a different inlet (4') or opening (5), in particular wherein the inlet (4') or opening (5) has a different shape and/or size.

7. The acoustic protection arrangement (1) of any one of claims 1 to 6, wherein at least a part of the plurality of acoustic protection modules (2, 2', ...) is jointly covered by a microperforated sheath (9), in particular wherein the sheath (9) has a thickness of less than 10 mm, more particularly less than 5 mm, even more particularly less than 1 mm, and in particular wherein the sheath (9) features perforations having a diameter or an extent of less than 2 mm, more particularly of less than 1 mm, even more particularly of less than 0.5 mm, and in particular wherein the perforations are spaced apart by less than 50 mm, more particularly by less than 10 mm, even more particularly by less than 5 mm, in particular wherein the sheath is made of a polyester, in particular biaxially-oriented polyethylene terephthalate, such as Mylar®.

8. A launch vehicle structure with an acoustic protection arrangement (1) according to any one of claims 1 to 7 disposed on an inside wall of the structure, in particular on a cylindrical, conical or doubly curved portion of the inside wall, the structure in particular being at least one of the following:
- a payload fairing,
- an inter-stage adapter,
- a multi-launch canister,
- a heat shield,
- a payload attachment fitting.

9. A kit of parts for assembling an acoustic protection arrangement (1) according to any one of claims 1 to 7, comprising the following parts:
- at least a first set (A) of acoustic protection modules (2, 2', ...) with a first structure, wherein the first set (A) of acoustic protection modules (2, 2', ...) comprise acoustic protection modules (2, 2', ...) having different acoustic properties, in particular having different peak absorption frequencies (fₚ, f_{p'}, ...) or acoustic frequency responses;
and further optionally comprising one or more of the following parts:
- a second set (B) acoustic protection modules (2, 2', ...) with a second structure which is different than the first structure, in particular wherein the first and second sets (A, B) of acoustic protection modules (2, 2', ...) comprise acoustic protection modules (2, 2', ...) having different acoustic properties, in particular having different peak absorption frequencies (fₚ, f_{p'}, ...) or acoustic frequency responses;
- a set of different wall (6) or interior wall (6') elements adapted to be comprised in the acoustic protection modules (2, 2', ...), in particular having different stiffnesses, more particularly with different thicknesses and/or made of different materials, and in particular featuring a hole (4, 4', 5) of different shapes and sizes;
- a set of different base plates (8), in particular having different shapes and sizes, and in particular having different stiffnesses, more particularly with different thicknesses and/or made of different materials;
- a set of different microperforated sheaths (9), in particular with different thicknesses, and in particular featuring perforations of different diameters/extents, and in particular wherein the perforations are spaced apart at different distances.

10. A method for manufacturing an acoustic protection arrangement (1) according to any one of claims 1 to 7, comprising the steps of:
- providing acoustic and geometric requirements of a desired acoustic protection arrangement (1);
- based on the acoustic and geometric requirements selecting parts from a kit of parts according to claim 9 and arranging the selected parts to form a design of the acoustic protection arrangement (1);
- generating a three-dimensional geometrical model of the design of the acoustic protection arrangement (1);
- determining acoustic properties of the design of the acoustic protection arrangement (1) based on the three-dimensional geometrical model, in particular by means of computer simulation;
- comparing the determined acoustic properties with the acoustic requirements (1);
- modifying the design of the acoustic protection arrangement (1) in case the acoustic properties do not meet the acoustic requirements, in particular by one or more of:
∘ replacing/exchanging a part,
∘ adding/removing a part,
∘ modifying a part by moving a part within the part, and
∘ modifying a part by redesigning the part, and in particular adding the redesigned part to the kit of parts;
- repeating the steps of generating a three-dimensional geometrical model, determining acoustic properties, comparing the determined acoustic properties and modifying the design until the acoustic properties of the design of the acoustic protection arrangement (1) meet the acoustic requirements of the desired acoustic protection arrangement (1);
- manufacturing the parts, in particular by means of computer-controlled additive manufacturing, in particular 3D-printing, moulding, in particular vacuum moulding, and deep-drawing; and
- assembling the parts to form a manufactured acoustic protection arrangement (1).
